# FASCICULE DE BREVET EUROPEEN

(11) **EP 1 401 842 B1**
(45) Date de publication et mention de la délivrance du brevet: **04.10.2006**
(21) Numéro de dépôt: 02762516.9
(22) Date de dépôt: 03.07.2002
(51) Int. Cl.: C07F 3/06, C07F 15/06

(54) **PREPARATION D'ORGANOZINCIQUES AROMATIQUES ET COMPOSITION POUR CE FAIRE**
VERFAHREN ZUR HERSTELLUNG VON ORGANOZINKVERBINDUNGEN UND ZUSAMMENSETZUNG ZUR DURCHFÜHRUNG DERSELBEN
PREPARATION OF AROMATIC ORGANOZINC COMPOUNDS AND COMPOSITION THEREFOR

(30) Priorité: 04.07.2001 FR 0108880
(43) Date de publication de la demande: 31.03.2004
(73) Titulaire: RHODIA CHIMIE, 92512 Boulogne Billancourt Cedex (FR)
(72) Inventeur: PERICHON, Jacques, F-91600 Savigny-sur-orge (FR); GOSMINI, Corinne, F-91600 Savigny-sur-orge (FR); FILLON, Hyacinthe, F-94320 Thiais (FR)
(74) Mandataire: Kling, Simone
(86) Numéro de dépôt international: PCT/FR2002/002319
(87) Numéro de publication internationale: WO 2003/004504

(56) Documents cités:
- EP-A- 0 494 419
- WO-A-01/02625
- BURIEZ, O. ET AL: "Stability and reactivity of electrogenerated cobalt (I) towards aryl halides in the presence of additives such as vinyl acetate or methyl vinyl ketone. Application to the electrosynthesis of arylzinc compounds" JOURNAL OF ELECTROANALYTICAL CHEMISTRY (2001), 506(2), 162-169, XP002195473
- FILLON, H. ET AL: "Electrosynthesis of functionalized organodizinc compounds from aromatic dihalides via a cobalt catalysis in acetonitrile/pyridine as solvent" TETRAHEDRON LETTERS (2001), 42(23), 3843-3846, XP004249102
- GOSMINI, CORINNE ET AL: "New Efficient Preparation of Arylzinc Compounds from Aryl Halides Using Cobalt Catalysis and Sacrificial Anode Process" JOURNAL OF ORGANIC CHEMISTRY (2000), 65(19), 6024-6026, XP002195474

## Description

La présente invention a pour objet un nouveau procédé de synthèse de dérivés organozinciques aryliques. Elle vise plus particulièrement la synthèse des dérivés organozinciques aryliques par voie chimique en présence catalytique de l'élément cobalt.

La réactivité des organozinciques, surtout des organozinciques aryliques, présente de nombreuses spécificités qui les rendraient particulièrement intéressants dans de nombreuses opérations de synthèse organique. Toutefois, leur accès est difficile et souvent ils sont préparés à partir d'organométalliques réalisés avec des métaux plus électronégatifs, c'est-à-dire plus réducteurs.

En outre, la plupart des techniques exigent l'utilisation de milieux très aprotiques, et notamment très secs.

Des progrès importants ont été réalisés récemment par les mêmes inventeurs que la demande présente, progrès qui ont fait l'objet de la demande de brevet publiée en vertu du traité de coopération en matière de brevet sous le n° WO 01/02625 A1. La technique qui y est décrite propose une synthèse par voie électrolytique en présence de sels de zinc et en présence de sels de cobalt. La réduction cathodique du système conduit à la synthèse d'organozinciques avec de bons rendements faradiques. Cette technique est également très polyvalente. Dans cette technique le zinc métallique éventuellement présent à l'anode, ne joue que le rôle de source de sel de zinc, la réaction ayant lieu à la cathode.

Toutefois, cette technique présente les inconvénients liés à toute électrolyse.

Ainsi, il est relativement coûteux de mettre en oeuvre une telle technique et une technique électrolytique ne peut s'appliquer qu'à des produits coûteux.

Un autre problème réside dans la difficulté à produire de grosses quantités dans de faibles volumes par des techniques électrolytiques.

C'est pourquoi un des buts de la présente invention est de fournir un procédé permettant l'accès à des dérivés organozinciques avec de bons rendements, tant de réaction que de transformation, et ce sans utiliser une technique électrolytique. Ces buts, et d'autres qui apparaîtront par la suite, sont atteints par l'utilisation du cobalt comme catalyseur de la réaction entre le zinc métallique et un halogène arylique, et ce en l'absence d'un dispositif d'électrolyse.

Ainsi la particule, ou le morceau pris dans son ensemble de Zinc, n'est reliée à aucun système électrolytique externe, c'est-à-dire dont la source courant est située en dehors du milieu réactionnel, qui de ce fait ne peut avoir droit à l'appellation de «bain électrolytique» et ne joue pas le rôle d'anode. La formation d'organozincique peut être qualifiée de chimique car aucun courant apparent ne peut être mis en évidence.

A supposer qu'un jour l'on attribue un mécanisme électrochimique à cette réaction, la même parcelle de métal jouera alors à la fois le rôle de cathode en sus de celui d'anode.

Ce caractère chimique de la réaction est mis en évidence par la forme divisée de l'introduction du métal, le zinc est introduit sous forme divisée, par exemple poudre, tournures, grenailles, ... et n'est mis en contact avec aucune source de courant. Il n'y a aucune liaison électrique entre le zinc et une source de courant extérieure au milieu qui de ce fait n'est pas «électrolytique» mais simplement réactionnel.

Au cours de l'étude qui a mené à la présente invention, il a été montré qu'il était préférable d'éviter d'utiliser de bons complexants du cobalt, et notamment les complexants bidentés, tels que les bipyridyles. La pyridine elle-même ralentit considérablement la réaction en favorisant des réactions secondaires.

En revanche, les complexants légers, tels que les fonctions nitriles et éventuellement les dinitriles semblent favoriser la réaction.

Ainsi, selon la présente invention, il est préférable que les complexants de nature pyridinique soient inférieurs à deux fois la quantité exprimée en mole de sels de cobalt, de préférence inférieure à une fois.

Il est également souhaitable que les mêmes règles s'appliquent aux complexants forts du cobalt, tels que les amines et les phosphines éventuellement bidentées.

Cette règle peut s'exprimer de la manière suivante: le rapport molaire cobalt/coordinant fort choisi parmi les pyridines, les phosphines et les amines, est supérieur à 0,5, avantageusement à 1, de préférence 2.

Lorsqu'un complexant est multidenté, la règle précédente s'appliquera en utilisant les équivalents de fonction complexante, et non le nombre de moles de fonction de produit complexant.

Il a également été montré que la présence d'un halogénure d'aryle pouvait potentialiser la réaction ; surtout quand le noyau porteur de X dudit Ar-X est au moins aussi riche en électrons qu'un phényle. Cette potentialisation se fait surtout au moyen d'halogénures d'aryle, de noyau moins riches en électrons que celui de l'A-X, dont on désire faire le zincique.

Pour évaluer la richesse en électrons d'un noyau, on peut se référer aux constantes de Hammett en prenant comme référence la constante de Hammett σp. Cette catalyse du zinc par le cobalt est surprenante dans la mesure où, habituellement, le zinc est capable de réduire sous forme métallique, par une technique parfois appelée cémentation, l'élément cobalt qui est moins réducteur que le zinc.

Selon un autre aspect de l'invention, il a également été montré que la présence d'acide, avantageusement organosoluble, permettait l'amélioration significative des rendements.

Ces acides peuvent notamment être des acides carboxyliques, acides gras ou acides halogénés, et même perhalogénés. Les acides perfluorés présentent un intérêt particulier en raison de leur solubilité dans les phases organiques et de leur acidité relativement forte.

Sans que cette explication soit limitative, il est plausible que le rôle de ces acides soit une dépassivation du zinc utilisé. Les solvants utilisés sont, de préférence, les solvants de type aprotique polaire, et notamment ceux dont l'indice donneur est au moins égal à 10, et, de préférence, au plus égal à 30, avantageusement compris entre 20 et 30, les bornes étant comprises.

Ledit indice donneur correspond au ΔH (variation d'enthalpie) exprimé en kilocalorie par mole de l'association dudit solvant aprotique polaire avec le pentachlorure d'antimoine. Ceci est décrit plus précisément dans l'ouvrage de Christian Reichardt : «Solvents and Solvent effects in organic chemistry» VCH, page 19, 1988. A cette page, on trouve la définition de l'indice donneur exprimé en termes anglo-saxons par «donor number».

A l'exception du cas particulier des nitriles, il est préférable que le caractère donneur ne soit dû, ni aux azotes, ni aux phosphores, mais plutôt dû à l'oxygène.

Dans le cas des solvants à fonction amide, on considérera que l'aspect donneur est lié à l'oxygène doublement lié au carbone de la fonction amide. Ainsi, les amides font partie des solvants susceptibles de donner de bons résultats pour la réaction selon l'invention.

Le solvant doit être suffisamment polaire pour dissoudre les métaux, ou plus exactement les sels de métaux utilisés, et il doit être suffisamment lipophile pour dissoudre au moins en partie les substrats dont on veut former l'organozincique. Il est préférable d'utiliser des solvants qui soient suffisamment peu acides (il est souhaitable que leur pKa soit au moins égal à 16, avantageusement à 20, de préférence à 25, pour que les réactions avec l'hydrogène soient aussi peu marquées que possible. Ainsi, les alcools primaires sont trop acides pour donner de bons résultats.

S'il y a besoin d'acidité, il convient alors d'en maîtriser la quantité utilisant les acides que l'on a mentionnés ci-dessus, et notamment les acides carboxyliques tels que l'acide trifluoroacétique et l'acide acétique lui-même. Les acides gras peuvent également être utilisés, qu'ils soient perhalogénés (en général perfluorés) ou non sur le carbone porteur de la fonction carboxylique.

Pour revenir aux solvants, plus spécifiquement, on préférera les solvants dits aprotiques polaires tels que par exemple, seuls ou en mélange :
- les solvants purement oxygénés, en particulier les éthers, de préférence les polyéthers tels que le diméthoxy-1,2-éthane ou des éthers cycliques tels que le THF ou le dioxane ;
- des amides ou des urées (DMF, N-méthylpyrrolidone-2, imidazolidone, tétraméthylurée, diméthoxypropylène, etc.) ;
- des sulfones (par exemple sulfolane) ou des sulfoxydes (tels que le DMSO). Il conviendra toutefois, dans ces cas là, de vérifier que le zinc n'est pas capable, dans les conditions réactionnelles, de réduire ces solvants;
- les composés à fonction nitrile (pour ceux qui sont préférés, voir ci-après) ;
- les nitriles, pour être utilisés, doivent de préférence être liquides à la température de réaction (cela va sans dire), mais les polynitriles peuvent également être utilisés, et notamment les bis-nitriles. Ces bis-nitriles présentent un intérêt particulier parce que peu complexants. Ils peuvent être utilisés comme solvant, cosolvant, ou complexant léger, sans abaissement de rendement.

Il est souhaitable, pour éviter que le milieu ne soit trop acide, que les bis-nitriles constituant le solvant, une partie du solvant, ou le coordinant, soient tels que, par le chemin le plus direct, deux fonctions nitriles soient séparées par au moins deux carbones, avantageusement par trois carbones.

Donnent de bons résultats, les dinitriloalcoylènes dont le groupe alcoylène comporte de 2 à 8 atomes de carbone. On peut notamment citer le glutaronitrile, le méthylglutaronitrile, l'adiponitrile, le pimélonitrile et le subéronitrile.

Le cobalt peut être introduit dans le milieu réactionnel de différentes manières et surtout sous différentes formes, mais il est préférable qu'il soit introduit sous la forme d'un sel, de préférence d'un sel cobalteux. Les sels cobaltiques peuvent également être utilisés mais ils induiront une consommation de zinc supplémentaire.

Pour être efficace, il est souhaitable que le cobalt soit présent en une concentration minimale, au moins égale à 10⁻³ M. Pour être économique, il est préférable que le cobalt ne soit pas trop concentré, aussi préfère-t-on que la teneur en cobalt soit au plus égale à 0,2 M. II a été montré au cours de la présente étude que les sels de zinc pouvaient être utiles au démarrage de la réaction. Aussi est-il préférable d'ajouter des sels de zinc au milieu réactionnel initial. Ces sels de zinc peuvent être toute sorte de sels, mais il est souvent plus pratique de les introduire sous forme d'halogénure et notamment de l'halogénure correspondant aux halogénures des substrats dont on désire faire l'organozincique.

Il en va de même pour le cobalt. Il convient en effet d'éviter la multiplicité des anions dans le milieu pour pouvoir plus aisément traiter les solutions réactionnelles.

La quantité de sels de zinc mis en oeuvre ne présente pas de maximum net mais il est préférable de s'arranger pour que le sel de zinc, après la fin de la réaction, ne dépasse pas la solubilité dudit sel de zinc dans les milieux.

Il est possible de se passer de sel de zinc mais la réaction, en tous cas dans ses débuts, deviendra autocatalytique, les sels de zinc étant formés au cours de la réaction. Il est ainsi préférable d'avoir une concentration en sel de zinc au moins égale à 10⁻³ M, de préférence au moins 10⁻² M.

Les halogénures d'aryle, adjuvant ou potentialisant la réaction, sont notés notamment dans les exemples. Ar'X' où X' représente l'halogénure en question. Les quantités d'halogénure adjuvant (Ar'X') peuvent être très faibles mais il est préférable qu'elles soient au moins égales à 10⁻³ M. Il est également préférable que sa concentration soit au plus égale, et même inférieure, à celle du cobalt exprimé en mole par litre. En effet, si elle est supérieure à celle du cobalt, on constate la présence d'organozinciques de l'adjuvant qui peuvent constituer une impureté vis-à-vis de l'organozincique désiré. X' peut prendre les mêmes valeurs que X (notamment chlore, brome, iode) mais on choisit d'ordinaire X' = X.

Lorsque Ar'X' reste inférieur à la quantité de cobalt présent (exprimée en mole par litre), l'organozincique intermédiaire éventuel se retrouve essentiellement transformé en dérivé hydrogéné correspondant à l'halogénure d'aryle adjuvant.

Lorsque l'halogénure d'aryle adjuvant est tel que l'halogène se trouve à proximité (en position ortho ou équivalente) d'un groupe fonctionnel complexant, même faiblement, le cobalt, on peut former l'organozincique correspondant à Ar'X, ce qui peut être gênant lors de la synthèse. Aussi, en général, préfère-t-on ne pas les utiliser comme halogénure aromatique adjuvant.

En revanche, de tels composés peuvent, sans aromatique adjuvant, être facilement transformés en organozinciques.

La concentration en acide est avantageusement au moins égale à 10⁻³ M, avantageusement 5 x 10⁻³ M. La valeur supérieure est essentiellement limitée par la quantité de zinc métallique dans le milieu. La quantité d'acide doit être inférieure à celle qui est nécessaire pour dissoudre la totalité du zinc métallique et laisser suffisamment de zinc métallique pour la réaction.

Selon la présente invention, il a été possible de remplacer en des quantités équivalentes (exprimées en mole) par de l'iode (I₂).

En général, que ce soit de l'iode ou des acides, il est préférable de se placer à un niveau relativement faible pour éviter les réactions parasites, notamment la formation de l'hydrocarbure en lieu et place de l'organozincique désiré. Aussi généralement utilise-t-on des quantités d'acide ou d'iode inférieures à 10%, de l'aromatique constituant le substrat précurseur de l'organozincique exprimé en mole, avantageusement au plus égales à 5%.

La concentration en un ArX à transformer en zincique, où X représente l'halogénure ou le pseudohalogénure dudit (pseudo)halogénure d'aryle et où Ar représente le reste aromatique, n'est pas critique. Toutefois, il est préférable de se placer dans une zone de concentration comprise entre 10⁻² M et 2 M, de préférence entre 2 x 10⁻² M et 1,5 M.

La pression n'a quasiment pas d'importance sur la réaction.

En revanche, la température peut être un facteur de diminution de rendement, en particulier il est préférable de mener la température aussi bas que possible, en général entre le point de fusion du milieu réactionnel et 100°C, avantageusement à une température d'au plus 80°C, et même d'au plus 50°C.

Lorsque la cinétique est suffisamment rapide, il est avantageux de se placer au voisinage de l'ambiante, et même de 0°C.

Les substrats (ArX) susceptibles d'être transformés en organozinciques par la présente invention représentent une large palette de composés. Les halogénures sont en général des halogénures correspondant aux halogènes relativement lourds, c'est-à-dire aux halogènes plus lourds que le fluor.

On peut également donner comme indication que lorsque l'halogène (X) est lié à un noyau aromatique appauvri en électrons, il est préférable d'utiliser comme halogène des bromes ou des chlores, les chlores étant réservés aux noyaux particulièrement appauvris en électrons. Si la condition est remplie par les hétérocycles à 6 chaînons, dans le cas des aryliques homocycliques, pour utiliser un chlorure, il est préférable que la somme des constantes de Hammett σₚ des substituants (compte non tenu d'halogénure partant) soit au moins égale à 0,40, de préférence à 0,50. En revanche, les noyaux particulièrement enrichis en électrons peuvent utiliser comme halogénure de l'iode.

Pour plus de détails sur les constantes de Hammett, on peut se référer à la 3^{ème} édition du manuel écrit par Monsieur le Professeur Jerry March "advanced organic chemistry" (pages 242 à 250) et édité par John Wiley and sons.

Les substrats (ArX) présentant, comme noyau aromatique porteur de X, des hétérocycles à 5 chaînons, lesquels comportent comme hétéroatome un chalcogène (tel le furanne et le thiophène) présentent une transformabilité en zincique élevée, montrent une réactivité à part et sont toujours aisément transformables en zincique.

L'appauvrissement en électrons du noyau peut être dû, soit à la présence de groupes électroattracteurs comme substituants, soit, dans le cas des noyaux à 6 chaînons, par le remplacement d'un carbone par un hétéroatome. En d'autres termes, le noyau appauvri en électrons peut être un noyau hétérocyclique à 6 chaînons, notamment les noyaux hétérocycliques présentant un atome de la colonne de l'azote, et plus particulièrement l'azote.

Parmi les groupes électroattracteurs conduisant à de bons résultats, il convient de citer les groupements acyles, les groupements nitriles, les groupements sulfones, les groupements carboxylates, les groupements trifluorométhyles ou, plus généralement, les groupements perfluoroalcoyles et les halogènes de rang moins élevé que l'halogénure qui sera transformé en organozincique. Lorsque les substituants sont des halogènes du même rang, on forme en général un diorganozincique.

Parmi les groupes donneurs, c'est-à-dire donnant des résultats médiocres avec le chlore mais bons avec le brome, on peut citer les groupements alcoyloxyles, les groupements alcoyles, les groupements amines et dialcoylamines.

Le dérivé aromatique, substrat du présent procédé, répond avantageusement à la formule suivante : 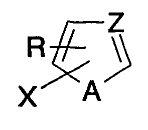 où:
- Z représente un chaînon trivalent ―C(R₁)=, un atome de la colonne V, avantageusement un azote ;
- X représente l'halogène partant ;
- A représente, soit un maillon choisi soit parmi les groupes ZH soit parmi les chalcogènes, avantageusement d'un rang au moins égal à celui du soufre, soit parmi les groupes insaturés divalents à 2 chaînons C R₂=CR₃, N=CR₂ CR₂=N.
Dans la mesure où ils sont portés par des atomes contigus, deux des radicaux R, R₁, R₂, R₃ peuvent être reliés pour former des cycles.

Ainsi les aryliques peuvent être notamment choisis parmi les formules suivantes : 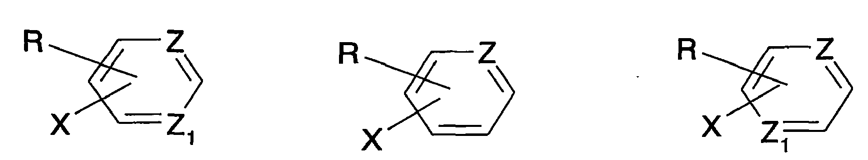 où Z₁ est choisi parmi les mêmes significations que celles données pour Z.

Les radicaux R₁, R₂, R₃ sont choisis parmi les substituants mentionnés ci-dessus et notamment :
- les groupes électroattracteurs, en particulier les groupements acyles, les groupements nitriles, les groupements sulfones, les groupements carboxylates, les groupements trifluorométhyles ou, plus généralement, les groupements perfluoroalcoyles et les halogènes de rang moins élevé que l'halogénure qui sera transformé en organozincique.
- les groupes donneurs, notamment les groupements aryloxyles, alcoyloxyles, les groupements hydrocarbyles tels qu'aryle et alcoyle (ce dernier mot étant pris dans son acception étymologique), les groupements amines, y compris les mono et disubstitués par des groupes hydrocarbonés alcoylamines.

Il est souhaitable que les substrats présentent au plus 50 atomes de carbone, avantageusement au plus 30 atomes de carbone, de préférence au plus 20 atomes de carbone.

Parmi les substrats particulièrement intéressants figurent les halogénures, de préférence chlorures, ou surtout bromure d'aryles, portant notamment en position méta, un carbone aliphatique (c'est à dire sp³) portant au moins 2 fluors. Par exemple les halogénures, de préférence chlorures de trifluorométhylaryles.

Ce procédé de synthèse des organozinciques peut être étendu, d'une part à l'ensemble des organozinciques liés à des atomes de carbone d'hybridation sp² et notamment à la synthèse d'organozinciques à partir d'halogénures vinyliques, surtout quand ces derniers sont conjugués avec des noyaux aromatiques.
En général le substrat est ajouté en dernier au mélange réactionnel.

Un autre objet de la présente invention est une composition formant un réactif susceptible de réaliser la synthèse d'organozinciques, caractérisé par le fait qu'il comporte un sel de cobalt, un sel de zinc, un solvant aprotique polaire et du zinc élémentaire sous forme divisée, le zinc élémentaire se trouvant sous la forme solide, les autres éléments étant sous une forme dissoute dans le solvant. Cette composition comporte en outre un acide ou de l'iode moléculaire.

L'addition des constituants du réactif peut se faire dans divers ordres d'addition.

Selon une mise en oeuvre courante mais non obligatoire, dans le solvant, on introduit les sels utilisés (de cobalt, si cela est prévu, de zinc et optionnellement les autres), les adjuvants d'activation du zinc métallique (tels que iode ou acide), l'éventuel Ar'X' (ou l'ArX, ou une portion d'ArX, quand il n'y a pas d'Ar'X'), puis dans un second temps le zinc, puis enfin l'ArX (quand il y a un Ar'X', ou quand l'Ar-X n'a pas été déjà introduit en totalité).

A titre d'enseignement, par l'exemple (paradigme), on peut se référer aux conditions expérimentales générales qui donnent un ordre d'introduction des composants du réactif. Ces conditions opératoires générales ont été utilisées dans les exemples.

### Conditions expérimentales générales:

On prépare initialement le mélange ci-après :
1) Solvant acétonitrile 20 ml, ou acétonitrile 20 ml + adiponitrile 0,5 ml (1,5 équivalent par rapport au CoBr₂), ou acétonitrile 20 ml + MVK (1,5 équivalent par rapport au CoBr₂). La méthylvinylcétone (MVK) est stable dans les conditions opératoires.
   Zn en poudre 50 mmol (3,3 eq/ArX)
   CF₃COOH : (0,0125 à 0,025 M)
   PhBr (Ar'X') : 0,10 eq/ArX
   CoBr₂: 0,10 eq/ArX
   ZnBr₂: 0,10 eq/ArX
   Une fois le dégagement de Ar'H terminé, en général ¼ d'heure après que le mélange précédent a été fait, on ajoute le substrat ArX en quantité égale à 15 mmol.
2) ArBr: 15 mmol
   Réaction :

   FG-Ar-X → FG-Ar-Zn-X

   avec FG représentant le substituant étudié de l'aromatique.

Les exemples non limitatifs suivants illustrent l'invention.

### Exemple 1 - Nature du solvant

Dans solvant = CH₃CN 20 ml

| **FG** | **X** | **% ArH** | **% ArAr** | **% ArX restant** | **% ArZnX** |
|---|---|---|---|---|---|
| p-OCH₃ | Br | 10 | 4 | 9 | 78 |
| p-C₂H₅OCO | Br | 10 | 17 | 0 | 73 |
| m-CF₃ | Br | 6 | 10 | 0 | 84 |

Dans solvant = CH₃CN 20 ml + adiponitrile 1,5 eq/CoBr₂

| **FG** | **X** | **% ArH** | **% ArAr** | **% ArX restant** | **% ArZnX** |
|---|---|---|---|---|---|
| p-OCH₃ | Br | 16 | 13 | 0 | 71 |
| p-C₂H₅OCO | Br | 11 | 12 | 0 | 76 |
| m-CF₃ | Br | 12 | 3 | 0 | 80 |
| p-CN | Br | 3 | 2 | 0 | 95 |

Dans solvant = CH₃CN 20 ml + MVK 1,5 eq/CoBr₂

| **FG** | **X** | **% ArH** | **% ArAr** | **% ArX restant** | **% ArZnX** |
|---|---|---|---|---|---|
| p-OCH₃ | Br | 14 | 34 | 0 | 52 |
| p-C₂H₅OCO | Br | 7 | 8 | 0 | 85 |
| p-CN | Br | 5 | 0 | 0 | 95 |

Les résultants obtenus dans ces différents solvants varient d'une espèce à une autre ; on a donc choisi de travailler dans un mélange CH₃CN 20 ml + adiponitrile 1,5 eq/CoBr₂.

### Exemple 2 - Nature de l'halogénure associé au zinc

Avec ZnBr₂

| **FG** | **X** | **% ArH** | **% ArAr** | **% ArX restant** | **% ArZnX** |
|---|---|---|---|---|---|
| p-OCN | Br | 0 | 0 | 0 | 100 |
| p-CH₃ | Br | 9 | 20 | | 71 |

Avec ZnCl₂

| **FG** | **X** | **% ArH** | **% ArAr** | **% ArX restant** | **% ArZnX** |
|---|---|---|---|---|---|
| p-OCN | Br | 0 | 0 | 0 | 100 |

Avec Zn(CH₂SO₃)₂

| **FG** | **X** | **% ArH** | **% ArAr** | **% ArX restant** | **% ArZnX** |
|---|---|---|---|---|---|
| p-CH₃ | Br | 50 | 3 | | 47 |

### Exemple 3 - Moment de l'introduction du sel de zinc (ici ZnBr₂)

Dans solvant = CH₃CN 20 ml + adiponitrile 1,5 eq/CoBr₂
ZnBr₂ dans première étape

| **FG** | **X** | **% ArH** | **% ArAr** | **% ArX restant** | **% ArZnX** |
|---|---|---|---|---|---|
| p-OCH₃ | Br | 16 | 13 | 0 | 71 |
| m-CF₃ | Br | 12 | 3 | 0 | 80 |
| p-COCH₃ | Br | 15 | 34 | 0 | 52 |
| p-C₂H₅OCO | Br | 11 | 12 | 0 | 76 |

Dans solvant = CH₃CN 20 ml + adiponitrile 1,5 eq/CoBr₂
ZnBr₂ dans deuxième étape

| **FG** | **X** | **% ArH** | **% ArAr** | **% ArX restant** | **% ArZnX** |
|---|---|---|---|---|---|
| p-OCH₃ | Br | 11 | 0 | 0 | 89 |
| p-C₂H₅OCO | Br | 13 | 9 | 0 | 76 |
| p-COCH₃ | Br | 15 | 34 | 0 | 52 |

Les résultats obtenus sont sensiblement identiques à ceux obtenus selon la procédure usuelle.

### Exemple 4 - Nature de l'halogénure associé au zinc

Que l'on utilise ZnBr₂ ou zncl2, les résultats sont identiques : dans les cas de p-BrPhCN on obtient 100% de p-BrZnPhCN dans les deux cas.

### Exemple 5 - Nature de l'activant du zinc en poudre

Dans solvant = CH₃CN 20 ml + adiponitrile 1,5 eq/CoBr₂
Activant = CF₃COOH

| **FG** | **X** | **% ArH** | **% ArAr** | **% ArX restant** | **% ArZnX** |
|---|---|---|---|---|---|
| p-OCH₃ | Br | 16 | 13 | 0 | 71 |
| p-C₂H₅OCO | Br | 11 | 12 | 0 | 76 |

Dans solvant = CH₃CN 20 ml + adiponitrile 1,5 eq/CoBr₂
Activant = I₂

| **FG** | **X** | **% ArH** | **% ArAr** | **% ArX restant** | **% ArZnX** |
|---|---|---|---|---|---|
| p-OCH₃ | Br | 12 | 0 | 0 | 88 |
| p-C₂H₅OCO | Br | 7 | 19 | 0 | 75 |

Dans solvant = CH₃CN 20 ml + adiponitrile 1,5 eq/CoBr₂
Activant = acide acétique

| **FG** | **X** | **% ArH** | **% ArAr** | **% ArX restant** | **% ArZnX** |
|---|---|---|---|---|---|
| p-OCH₃ | Br | 22 | 0 | 0 | 77 |
| p-C₂H₅OCO | Br | 16 | 14 | 0 | 70 |

Si l'activant est I₂, les rendements en dérivé zincique sont améliorés.

### Exemple 6 - Remplacement de PhBr par d'autres halogénures aromatiques dans la première phase de la réaction

Que l'on utilise comme Ar'X', p-BrPhCOOEt, p-BrPhCN, m-BrPhCF₃, o-BrPhCN, ou encore la 3-bromopyridine, on obtient des résultats identiques à ceux obtenus avec PhBr. Tous ces halogénures sont transformés en PhH, sauf dans le cas de o-BrPhCN qui est converti en partie en o-BrZnPhCN.
1) Choix de l'halogénure aromatique (Ar'Br)
   Conditions: CH₃CN (20 ml), adiponitrile (0,5 ml), CoBr₂ (0,1 eq), ZnBr₂ (0,1 eq), CF₃COOH (0,0125 à 0,025M), Zn en poudre (3,3eq), Ar'Br (0,1 eq), addition de 15 mmol de ArBr (1 eq) quand tout Ar'Br est consommé. ArBr est p-BrPhOCH₃. On a testé l'un après l'autre les Ar'X suivants: p-BrPhCO₂Et, p-BrPhCN, m-BrPhCF₃, o-BrPhCN, 3 BrPyridine.
   Les résultats obtenus (rendement 65 à 72% en p-BrZnPhOCH₃) sont comparables à ceux obtenus avec PhBr. Tous les Ar'Br sont transformés en ArH, sauf o-BrPhCN qui est converti en partie en o-BrZnPhCN.
2) Influence du rapport Ar'Br/CoBr₂
   Les conditions opératoires sont les mêmes que celles de 1), avec ArBr étant p-BrPhOCH₃ et Ar'X' étant PhBr. Trois rapports Ar'X'/CoBr₂ ont été expérimentés.
   Le rapport (Ar'Br/CoBr₂) de ½[(0,05eq)/(0,1 eq)] donne le même résultat qu'avec un rapport de 1 [Ar'X=CoBr₂ = 0,1 eq], à savoir un rendement en p-BrZnPhOCH₃ allant de 68 à 70%.
   Un rapport de 2 [(0,2 eq)/(0,1 eq)] donne le même résultat. Dans ce cas, toutefois, il a été établi qu'environ 50% de PhBr est transformé en PhZnBr.

### Exemple 7 - Influence de la présence de pyridine

1) Mêmes conditions que celles de l'exemple 6-1, avec comme solvant le mélange CH₃CN-pyridine (20 ml-2,5 ml), sans adiponitrile.
   Avec ArBr étant p-BrPhOCH₃ et Ar'X' étant PhBr, on observe que la réaction est très ralentie.
2) Mêmes conditions que 1) mais absence de PhBr.
   A partir de p-BrPhOCH₃ on n'obtient pratiquement pas de p-BrZnPhOCH₃ en 24^{H}, alors qu'en absence de pyridine les réactions ont une durée de 15 à 20 mn.
3) Mêmes conditions que 2) avec ArBr = p-BrPhCO₂Et.
   ArBr est converti en 24^{H}à 60% en p-BrZnPhCO₂Et.
   Ainsi la présence de pyridine ralentit surtout la formation des organozinciques dont le noyau est riche en électrons.

### Exemple 8 - Etude de divers substrats

On a choisi de travailler dans les conditions suivantes :
1) Solvant : acétonitrile 20 ml + adiponitrile 0,5 ml
Zn en poudre 50 mmol (3,3 eq/ArX)
CF₃COOH : (0,0125 à 0,025 M)
PhBr (Ar'-X') : 0,10 eq/ArX
CoBr₂ : 0,10 eq/ArX
ZnBr₂ : 0,10 eq/ArX
2) ArBr : 15 mmol
Les réactions sont menées à température ambiante. Les résultats obtenus sont les suivants :

| FG | **X** | **%ArH** | % ArAr | **% ArX restant** | **% ArZnX** |
|---|---|---|---|---|---|
| p-OCH₃ | Br | 16 | 13 | 0 | 71 |
| m-OCH₃ | Br | 7 | 23 | 0 | 70 |
| o-OCH₃ | Br | 6 | 7 | 0 | 87 |
| p-CH₃ | Br | 9 | 20 | 0 | 71 |
| P-C₂H₅OCO | Br | 11 | 12 | 0 | 76 |
| m-CF₃ | Br | 12 | 3 | 0 | 80 |
| p-Cl | Br | 6 | 5 | 0 | 89 |
| p-F | Br | 9 | 21 | 0 | 70 |
| p-COCH₃ | Br | 15 | 34 | 0 | 52 |
| p-CN | Br | 3 | 2 | 0 | 95 |
| m-CN | Br | 4 | 0 | 0 | 96 |

| **FG** | **X** | **% ArH** | **% ArAr** | **% ArX restant** | **% ArZnX** |
|---|---|---|---|---|---|
| o-CN | Br | 0 | 0 | 0 | 100 |
| 3-Bromothiophène | Br | 29 | 8 | 7 | 55 |
| **2-Bromopyridine** | Br | | 0 | 0 | 100 |
| p-CH₃OCO | Cl | 23 | 0 | 71 | 6 |
| p-OCH₃ | I | 8 | 3 | 0 | 88 |
| p-C₂H₅OCO | I | 14 | **11** | 0 | 75 |
| X-(CH₂)₃CO₂C₂H₅ | Br | 43 | 0 | 45 | 12 |
| X-(CH₂)₃CN | Br | | 0 | 0 | 100 |
| X-Ph-SO₂ | Cl | 23 | 0 | 37 | 41 |
| p-CO₂CH₃ | Cl | 23 | 0 | 71 | 6 |
| p-NH₂ | Br | 52 | 0 | 8 | 40 |

| | | | | | |
|---|---|---|---|---|---|
| * CoBr₂ : 0.20 eq/ArX ZnBr₂: 0.20 eq/ArX | | | | | |

### Exemple 9 - Ajout fractionné de CoBr₂

Mêmes conditions que dans l'exemple 6 mais sans Ar'Br et sans ArBr et CoBr₂ = 0,01 eq. On laisse 30 mn, puis ajout de 0,09 eq de CoBr₂ et 1 eq de ArBr (p-BrPhCO₂Et).
On obtient un rendement en p-BrZnPhCO₂Et de 60% (rendement de réaction).

### Exemple 10 - Réactions en 2 étapes

Conditions identiques à l'exemple 6 mais en 2 étapes :
1^{ère} étape : absence de ArBr et de ZnBr₂
2^{ème} étape : 10 à 30 mn après, addition de ZnBr₂ (0,1 eq) et de ArBr (1 eq)

Résultats :

| **ArBr** | **% ArH** | **% Ar-Ar** | **% ArZnX** |
|---|---|---|---|
| p-BrPhCO₂Et | 13 | 8 | 76 |
| p-BrPhCOCH₃ | 14 | 12 | 74 |
| p-BrPhOCH₃ | 11 | 0 | 89 |
| p-BrPhCH₃ | 14 | 19 | 67 |

Résultats sensiblement identiques à ceux obtenus selon la procédure usuelle, sauf avec p-BrPhCOCH₃ où le rendement est notablement augmenté (74% de ArZnX en 10 minutes) mais, à 20°C, ce zincique se décompose et se transformerait progressivement en Ar-Ar.

### Exemple 11 - Influence de la température

Conditions identiques à l'exemple 6 mais réactions effectuées à 0°C et sans adiponitrile.

| **ArBr** | **% ArH** | **% Ar-Ar** | **% ArX restant** | **% ArZnX** | **Temps (min)** |
|---|---|---|---|---|---|
| p-BrPhCHO | 9 | 44 | 23 | 23 | 80 |
| p-BrPhCOCH₃ | 8 | 23 | 10 | 59 | 25 |

Dans les 2 cas, évolution vers Ar-Ar quand la température augmente.

## Revendications

1. Utilisation en l'absence d'un dispositif d'électrolyse, du cobalt comme catalyseur de la synthèse de composés organozinciques aryliques, à partir de zinc métallique et d'halogénure arylique ArX.

2. Utilisation selon la revendication 1, **caractérisée par le fait que** le cobalt est introduit dans milieu réactionnel à l'état cobalteux.

3. Utilisation selon les revendications 1 et 2, **caractérisée par le fait que** le cobalt est faiblement coordiné, avantageusement, le rapport molaire cobalt sur coordinant fort choisi parmi les pyridines, les phosphines et les amines, est supérieur à 0,5, avantageusement à 1, de préférence 2.

4. Utilisation selon la revendication 1, **caractérisée par le fait que** le cobalt est introduit sous forme de CoBr₂.

5. Utilisation selon la revendication 1, **caractérisée par le fait que** le zinc est introduit sous forme de ZnBr₂, Zn(CH₂SO₃)₂ ou ZnCl₂.

6. Utilisation selon la revendication 1, **caractérisée par le fait que** l'on introduit un solvant organique polaire, de préférence l'acétonitrile et/ou l'adiponitrile.

7. Utilisation selon l'une des revendications 1 à 6, **caractérisée par le fait que** la réaction est menée en présence d'un halogénure aromatique adjuvant Ar'X' où X' représente un halogène plus lourd que le fluor, avantageusement brome et où Ar' représente un dérivé aromatique dont le noyau porteur de l'halogène X' est moins riche en électrons que le radical Ar, avantageusement au plus aussi riche qu'un radical phényle.

8. Utilisation selon la revendication 7, **caractérisée par le fait que** la teneur exprimée en mole par litre de l'aromatique Ar'X' est au plus égale à la concentration en cobalt du milieu.

9. Utilisation selon l'une des revendications 1 à 8, **caractérisée par le fait que** le milieu réactionnel comporte en outre un acide soluble dans le milieu ou de l'iode moléculaire, de préférence CF₃COOH, CH₃COOH, I₂.

10. Utilisation selon l'une des revendications 1 à 9, **caractérisée par le fait que** le substrat ArX est ajouté en dernier.

11. Utilisation selon l'une des revendications 1 à 10, **caractérisée par le fait que** l'halogénure X de ArX est brome ou iode, avantageusement brome.

12. Utilisation selon la revendication 1 à 11, **caractérisée par le fait que** l'on introduit les sels utilisés (de cobalt, si cela est prévu, de zinc et optionnellement les autres), les adjuvants d'activation du zinc métallique (tels que iode ou acide), l'éventuel Ar'X' (ou l'ArX, ou une portion d'ArX, quand il n'y a pas d'Ar'X'), puis dans un second temps le zinc, puis enfin l'ArX (quand il y a un Ar'X', ou quand l'Ar-X n'a pas été déjà introduit en totalité).

13. Composition formant un réactif susceptible de réaliser la synthèse d'organozinciques, **caractérisé par le fait qu'**il comporte un sel de cobalt, un sel de zinc, un solvant aprotique polaire et du zinc élémentaire sous forme divisée, le zinc élémentaire se trouvant sous la forme solide, les autres éléments étant sous une forme dissoute dans le solvant.

14. Composition selon la revendication 13, **caractérisée par le fait qu'**elle comporte en outre un acide ou de l'iode moléculaire.

## Claims

1. Use of cobalt as catalyst without an electrolysis device for the synthesis of aryl organozinc compounds from metallic zinc and from an aryl halide ArX.

2. Use as claimed in claim 1, wherein the cobalt is introduced into the reaction mixture in the cobaltous state.

3. Use as claimed in claims 1 and 2, wherein the cobalt is weakly coordinated; advantageously, the high molar ratio of cobalt to coordinate, chosen from pyridines, phosphines and amines, is greater than 0.5, advantageously than 1, preferably 2.

4. Use as claimed 1, wherein the cobalt is introduced in the form of CoBr₂.

5. Use as claimed in claim 1, wherein the Zinc is introduced in ZnBr₂, Zn(CH₂ SO₃)₂ or ZnCl₂ form.

6. Use as claimed in claim 1, wherein a polar organic solvent is introduced, preferably acetonitrile and/or adiponitrile.

7. Use as claimed in claims 1 to 6, wherein the reaction is carried out in the presence of an adjuvant aromatic halide Ar'X', where X' represents a halogen heavier than fluorine, advantageously bromine, and where Ar' represents an aromatic derivative whose ring carrying the halogen X' is less electron-rich than the radical Ar, advantageously at most as rich as a phenyl radical.

8. Use as claimed in claim 7, wherein the content, expressed in moles per liter, of the aromatic Ar'X' is at most equal to the cobalt concentration of the mixture.

9. Use as claimed in claims 1 to 8, wherein the reaction mixture furthermore includes an acid soluble in the mixture, or molecular iodine, preferably CF₃COOH, CH₃ COOH, I₂.

10. Use as claimed in claims 1 to 9, wherein the substrate ArX is added last.

11. Use as claimed in claims 1 to 10, wherein the halide X of ArX is bromine or iodine, advantageously bromine.

12. Use as claimed in claims 1 to 11, wherein used salt (of cobalt, if envisaged, of zinc and optionally of others), metallic zinc activation adjuvant (such as iodine or acid), the possible Ar'X' (or ArX, or a portion of ArX in absence of Ar'X'), then in a second time zinc, then finally ArX (in presence of Ar'X', or when ArX has not already been introduced entirely) are introduced.

13. Composition forming a reactant that can be used to carry out the synthesis of organozinc compounds, wherein it comprises a cobalt salt, a zinc salt, a polar aprotic solvent and elemental zinc in divided form, the elemental zinc being in solid form, the other elements being in a form dissolved in the solvent.

14. Composition as claimed in claim 13, wherein it furthermore includes an acid or molecular iodine.

## Patentansprüche

1. Verwendung von Cobalt in Abwesenheit einer Elektrolysevorrichtung als Katalysator der Synthese zinkorganischer Arylverbindungen ausgehend von metallischem Zink und einem Arylhalogenid ArX.

2. Verwendung gemäß Anspruch 1, **dadurch gekennzeichnet, daß** das Cobalt dem Reaktionsmedium im Cobalt(I)-Zustand zugeführt wird.

3. Verwendung gemäß den Ansprüchen 1 und 2, **dadurch gekennzeichnet, daß** das Cobalt schwach koordiniert ist und vorteilhafterweise das Molverhältnis Cobalt/aus Pyridinen, Phosphinen und Aminen ausgewähltes starkes Koordinationsmittel über 0,5, vorteilhafterweise über 1, bevorzugt 2 ist.

4. Verwendung gemäß Anspruch 1, **dadurch gekennzeichnet, daß** das Cobalt in Form von CoBr₂ zugeführt wird.

5. Verwendung gemäß Anspruch 1, **dadurch gekennzeichnet, daß** das Zink in Form von ZnBr₂, Zn(CH₂SO₃)₂ oder ZnCl₂ zugeführt wird.

6. Verwendung gemäß Anspruch 1, **dadurch gekennzeichnet, daß** ein polares organisches Lösungsmittel, bevorzugt Acetonitril und/oder Adiponitril zugeführt wird.

7. Verwendung gemäß einem der Ansprüche 1 bis 6, **dadurch gekennzeichnet, daß** die Reaktion in Gegenwart eines aromatischen Hilfshalogenids Ar'X' ausgeführt wird, worin X' ein schwereres Halogen als Fluor, vorteilhafterweise Brom darstellt und worin Ar' ein aromatisches Derivat darstellt, dessen das Halogen X' tragender Kern weniger elektronenreich als der Rest Ar, vorteilhafterweise höchstens ebenso elektronenreich wie ein Phenylrest ist.

8. Verwendung gemäß Anspruch 7, **dadurch gekennzeichnet, daß** der in Mol je Liter ausgedrückte Gehalt des Aromaten Ar'X' höchstens gleich der Cobaltkonzentration des Mediums ist.

9. Verwendung gemäß einem der Ansprüche 1 bis 8, **dadurch gekennzeichnet, daß** das Reaktionsmedium außerdem eine in dem Medium lösliche Säure oder molekulares Iod, bevorzugt CF₃COOH, CH₃COOH, I₂, umfaßt.

10. Verwendung gemäß einem der Ansprüche 1 bis 9, **dadurch gekennzeichnet, daß** das Substrat ArX als letztes zugefügt wird.

11. Verwendung gemäß einem der Ansprüche 1 bis 10, **dadurch gekennzeichnet, daß** das Halogenid X von ArX Brom oder Iod, vorteilhafterweise Brom ist.

12. Verwendung gemäß Anspruch 1 bis 11, **dadurch gekennzeichnet, daß** die verwendeten Salze (des Cobalts, falls vorgesehen des Zinks und gegebenenfalls die anderen), die Hilfsmittel zur Aktivierung des metallischen Zinks (wie etwa Iod oder Säure), gegebenenfalls Ar'X' (oder ArX oder ein Teil von ArX, wenn es kein Ar'X' gibt) und dann zu einem zweiten Zeitpunkt das Zink und schließlich das ArX (wenn es ein Ar'X' gibt oder wenn das ArX noch nicht ganz zugeführt wurde) zugeführt werden.

13. Zusammensetzung, die ein Reagenz bildet, mit dem eine Synthese von Zinkorganylen verwirklicht werden kann, **dadurch gekennzeichnet, daß** sie ein Cobaltsalz, ein Zinksalz, ein polares aprotisches Lösungsmittel und elementares Zink in verteilter Form umfaßt, wobei sich das elementare Zink in fester Form befindet und die anderen Elemente in einer in dem Lösungsmittel gelösten Form vorliegen.

14. Zusammensetzung gemäß Anspruch 13, **dadurch gekennzeichnet, daß** sie außerdem eine Säure oder molekulares Iod umfaßt.
